# EUROPÄISCHE PATENTSCHRIFT

(11) **EP 3 091 240 B1**
(45) Veröffentlichungstag und Bekanntmachung des Hinweises auf die Patenterteilung: **13.09.2017**
(21) Anmeldenummer: 16001031.0
(22) Anmeldetag: 06.05.2016
(51) Int. Cl.: F16B 39/10, F16B 41/00

(54) **VORRICHTUNG UND ANORDNUNG ZUR VERRIEGELUNG VON SCHRAUBBAREN ELEMENTEN**
DEVICE AND ASSEMBLY FOR LOCKING SCREWABLE ELEMENTS
DISPOSITIF ET SYSTEME DE VERROUILLAGE D'ELEMENTS FILETES

(30) Priorität: 07.05.2015 DE 102015107126
(43) Veröffentlichungstag der Anmeldung: 09.11.2016
(73) Patentinhaber: KNORR-BREMSE Systeme für Nutzfahrzeuge GmbH, 80809 München (DE)
(72) Erfinder: Hericher, Stéphane, F-14670 Basseneville (FR)

(56) Entgegenhaltungen:
- EP-A1- 0 459 028
- EP-A1- 1 283 373
- GB-A- 1 109 240
- US-A- 906 476
- US-A1- 2002 192 048
- US-A1- 2003 066 398

## Beschreibung

Die Erfindung betrifft eine Vorrichtung und eine Anordnung zur Verriegelung von schraubbaren Elementen, und bezieht sich insbesondere auf eine an Schraubverbindungen integrierbare Vorrichtung zur Verhinderung eines selbsttätigen Lösens einer Schraubverbindung, Schraube oder Mutter und/oder zur Verhinderung eines unerwünschten Änderns der Einstellung einer Stellschraubanordnung.

### Stand der Technik

In verschiedensten Bereichen der Technik werden Elemente wie etwa Gehäuseteile, Anbauteile, Komponenten und/oder ganze Baugruppen mittels Schraubverbindungen an anderen Teilen eines Gesamtaufbaus in einer vorbestimmten Lage festgelegt. Ferner müssen häufig Stellschraubanordnungen grundeingestellt und danach fixiert werden, aber später leichtgängig verstellbar bleiben. Häufig soll nach der Montage verhindert werden, dass sich Schraubverbindungen selbsttätig lösen oder Grundeinstellungen selbsttätig ändern können.

Bislang wird dies, unterstützt durch notwendigerweise einzuhaltende Anzugsdrehmomente, beispielsweise durch Verwendung geeigneter Unterlegscheiben, durch Verwendung spezieller Klebstoffe, die an Gewinden angreifen, und/oder Versehen einer Schraubverbindung mit Bohrungen und Vorsehen von Splinten in solchen Bohrungen und dergleichen erreicht. Das Dokument EP 1 283 373 A zeigt die Merkmale des Oberbegriffs von Anspruch 1. Solche Maßnahmen sind unter anderem dahingehend nachteilig, dass ein Verhindern eines selbsttätigen Lösens teilweise dennoch nicht sichergestellt werden kann, beispielsweise in Umgebungen, in welchen eine Schraubverbindung Erschütterungen und/oder Vibrationen ausgesetzt ist, oder die Sicherungswirkung einem bedarfsweise leichten Lösen der Schraubverbindung entgegenwirkt, beispielsweise wenn ein verwendeter Klebstoff nur ein mühsames Lösen erlaubt oder ein stramm bzw. fest sitzender und/oder korrodierter Splint nur mühsam aus seiner Bohrung zu entfernen ist.

Insbesondere im Bereich des Fahrzeugbaus aber ist es wichtig, dass sich in sicherheitsrelevanten Bereichen Schraubverbindungen beispielsweise zwischen Inspektions- und Wartungsintervallen nicht selbsttätig lockern, lösen und/oder verstellen. Außerdem soll eine einfache Sichtkontrolle für eine Feststellung eines ordnungsgemäßen Zustands der Schraubverbindung, beispielsweise im Rahmen von routinemäßigen Prüfungen durch einen Fahrer eines Fahrzeugs vor, während und/oder nach einer Fahrt möglich sein. Andererseits sollen für einen wirtschaftlichen Fahrzeugbetrieb Wartungsarbeiten und/oder Einstellarbeiten durch Sicherungsmechanismen nicht unnötig teuer oder kompliziert werden.

Der Erfindung liegt daher als eine Aufgabe zugrunde, eine Vorrichtung zur Verriegelung von schraubbaren Elementen zu schaffen, mit der eine Schraubverbindung kostengünstig und bei einfacher Handhabung sicher verriegelbar und leicht wieder entriegelbar ist.

Diese Aufgabe wird erfindungsgemäß durch eine Vorrichtung zur Verriegelung schraubbarer Elemente mit den in Anspruch 1 angegebenen Merkmalen und durch eine Anordnung und/oder ein System zur Verriegelung schraubbarer Elemente mit den in Anspruch 10 angegebenen Merkmalen gelöst. Vorteilhafte Weiterbildungen der Erfindung sind Gegenstand der Unteransprüche.

### Offenbarung der Erfindung

Die Erfindung sieht damit im Kern eine integrierbare Schraubverriegelung oder Schraubenverriegelung vor, die als zumindest ein zusätzliches Teil an einem Kopfabschnitt einer Schraube, einer Mutter, einer Gewindeanordnung, wie etwa einer Gewindespindel eines Federspeicherbremszylinders oder dergleichen, verbaut wird. Die Schraubenverriegelung weist einen elastisch oder federnd verformbaren Bereich auf, in dem die Schraubenverriegelung durch Verkippen angrenzender Bereiche relativ zueinander zwischen einem entspannten Zustand (einer Ruhelage oder Verriegelungsstellung) und einem verformten Zustand (einer Einstell- oder Entriegelungsstellung) änderbar ist.

Der Wechsel zwischen den beiden vorgenannten Zuständen kann durch Ansetzen, Aufsetzen, Aufstecken und dergleichen bzw. Abnehmen oder Entfernen eines Werkzeugs, das als Verdrehmittel zum Verdrehen, Einstellen, Festlegen und dergleichen der Schraube, Mutter oder Gewindeanordnung (als schraubbares Element) dient, auf einen zumindest teilweise dem Werkzeug bzw. der Werkzeugform entsprechend geformten Mittelansatzabschnitt erfolgen. Im Einzelnen ist dazu der Mittelansatzabschnitt derart geformt, dass er eine Außenform bzw. einen Außenumfang beispielsweise eines Kopfabschnitts eines schraubbaren Elements so ergänzt oder vervollständigt, dass die resultierende Gesamtaußenform der Wirkflächenform des Werkzeugs, beispielsweise der einer Gabel- oder Steckschlüsselvorrichtung, einer Nuss oder dergleichen entspricht.

Zum Festlegen, Verstellen oder Anziehen der Schraube, Mutter oder Gewindeanordnung wird das Werkzeug auf den Kopfabschnitt gesetzt und dabei über einen Werkzeug- oder Mittelansatzabschnitt der Schraubenverriegelung geführt. Da das Innenmaß des Werkzeugs kleiner ist als die Ausdehnung des Mittelansatzabschnitts, wird dadurch der Mittelansatzabschnitt auf das Innenmaß des Werkzeugs zusammengedrückt, d. h. mit einer gewissen Spannung elastisch auf eine kleinere Ausdehnung verformt. Diese Verformung kippt eine starr mit dem Mittelansatzabschnitt verbundene Rasteinrichtung um eine durch einen biegeelastischen Bereich der Schraubenverriegelung verlaufende Achse aus ihrer eingerasteten Stellung und versetzt so Schraubenverriegelung in einen nicht rastenden Zustand, so dass diese zusammen mit der Schraube, Mutter oder Gewindeanordnung verdreht werden kann.

Wird die Schraube, Mutter oder Gewindeanordnung nun durch Verdrehen des Werkzeugs in vorgesehener Weise festgelegt, beispielsweise mit einem vorbestimmten Anzugsdrehmoment gegen ein Lagerteil angezogen, dreht sich die Schraubenverriegelung im Kopfabschnitt bis in eine gewünschte Endlage mit.

Am Lagerteil ist eine Einrasteinrichtung angeordnet, die eine Vielzahl von Erhebungen und Einsenkungen aufweist, die in ihren Abmessungen und Abständen so bemessen sind, dass Erhebungen und Einsenkungen an der Rasteinrichtung der integrierbaren Schraubenverriegelung bei Erreichen der gewünschten Endlage geeignet fein auflösend und rastend in sie eingreifen können.

Die Einrasteinrichtung kann dabei direkt in das Lagerteil eingeformt sein, beispielsweise durch geeignete einstückige Bearbeitung des Lagerteils, in eine Ausnehmung des Lagerteils eingepresst sein oder geeignet festgelegt auf diesem aufliegen, oder als separates Element etwa in scheibenartiger Form oder dergleichen bereitgestellt sein, wenn ein die Verdrehverhinderungswirkung bzw. Sicherungswirkung bereitstellender Reib- oder Kraftschluss zwischen zugeordneten Oberflächen des Lagerteils und der Scheibe, beispielsweise durch von der Scheibenform in das Lagerteil verlaufende bolzen- oder zapfenartige Ausformungen oder dergleichen, geeignet und hinreichend hergestellt wird.

Wird sodann in der gewünschten Endlage das Werkzeug von dem Kopfabschnitt und damit von dem Mittelansatzabschnitt entfernt, verformt sich der Mittelansatzabschnitt elastisch federn und selbsttätig bzw. selbststellend zurück in seine entspannte Ruhelage, und greifen dabei die einander in dieser Stellung zugeordneten Erhebungen und Einsenkungen an den Rasteinrichtungen ineinander ein.

Da der Mittelansatzabschnitt bzw. eine Mehrzahl solcher Abschnitte verdrehsicher, beispielsweise durch Ausgestaltung als den Kopfabschnitt ergänzende Teilform(en) mit planen Flächen, an welchen Gegenflächen des Kopfabschnitts und Flächen der Teilform(en) aneinander liegen, an dem Kopfabschnitt der Schraube, Mutter oder Gewindeanordnung anliegt und ohne Einwirkung des Werkzeugs der Mittelansatzabschnitt in seiner entspannten Ruhelage in Eingriff mit den Erhebungen und Einsenkungen der Einrasteinrichtung verharrt, wird in diesem Zustand ein selbsttätiges Lösen oder Verstellen der Schraubverbindung auch unter erschwerten Bedingungen sicher verhindert.

Soll die Schraubverbindung wieder gelöst werden, ist die integrierbare Schraubenverriegelung an dem Mittelansatzabschnitt erneut derart verformbar, dass sie bei bzw. durch Aufsetzen des Werkzeugs, d. h. durch eine erneute Druckeinwirkung vermittels des Werkzeugs, wieder aus dem rastenden Eingriff mit der Einrasteinrichtung bewegt wird und ein Verdrehen des schraubbaren Kopfabschnitts wieder erlaubt.

Insbesondere ist der Mittelansatzabschnitt so ausgestaltet, dass Werkzeuge mit Normweiten die Verformung bei einem Festlegen und/oder Lösen erzeugen und somit kein spezielles Werkzeug notwendig ist.

Eine Anordnung aus verdrehsicherer Kombination aus Mittelansatzabschnitten und geeignet ausgeformtem Kopfabschnitt eines schraubbaren Elements, Rasteinrichtung an der Schraubverriegelung und externer Einrasteinrichtung bildet insgesamt ein integriertes bzw. integrierbares Schraubverriegelungssystem oder ein System bzw. Anordnung zur Verriegelung von schraubbaren Elementen.

Damit wird die Aufgabe gelöst durch eine Vorrichtung zur Verriegelung eines schraubbaren Elements, gekennzeichnet durch: einen eine Öffnung umschließenden Ringteil mit einem Innenumfang und einem Außenumfang in einer Ringteilebene; zumindest einen ersten und einen zweiten Verriegelungsabschnitt, die bogensegmentförmig jeweils mit einer vorbestimmten Länge an dem Außenumfang des Ringteils angeordnet sind und sich in einer zur Ringteilebene lotrechten ersten Richtung erstrecken; zumindest einen ersten und zweiten Mittelansatzabschnitt, die versetzt gegenüber dem ersten und dem zweiten Verriegelungsabschnitt jeweils an dem Innenumfang des Ringteils angeordnet sind und sich in einer zur Ringteilebene lotrechten zweiten Richtung, die zu der ersten Richtung entgegengesetzt ist, erstrecken; und zumindest eine erste und eine zweite biegeelastische Ausformung in einem Mittenbereich des Ringteils, wobei die Vorrichtung in einer Ruhelage eine Verriegelungsstellung einnimmt und durch eine elastische Kippverformung um eine durch die erste und die zweite biegeelastische Ausformung verlaufende Achse in eine Entriegelungsstellung versetzbar ist.

Vorteilhaft ist die Vorrichtung somit ein leichtes, vorzugsweise einstückiges, elastisch federnd verformbares und dreidimensionales Teil, das kostengünstig herzustellen ist und bei dem der Ringteil in einer Ebene liegt, sich die Verriegelungsabschnitt in einer ersten, zu der Ebene lotrechten oder orthogonalen Richtung, sich der Mittelansatzabschnitt in einer zweiten, ebenfalls im Wesentlichen zu der Ebene lotrechten und zu der ersten Richtung entgegengesetzten Richtung erstreckt. "Im Wesentlichen" soll hier bedeuten, dass zwar die Höhenrichtung des Mittelansatzsabschnitts der zweiten Richtung entspricht, zumindest eine Seitenfläche des Mittelansatzabschnitts aber geringfügig gegen diese Richtung geneigt ist und sich damit nicht vollständig exakt in deren Ebene befindet.

Bevorzugt liegen jeweils zwei Verriegelungsabschnitte diametral gegenüber, ist der Ringteil flachförmig ausgebildet und entfaltet die biegeelastische Ausformung eine in die Verriegelungsstellung selbstrückstellende Federwirkung.

Eine Vorrichtung mit zwei Verriegelungsabschnitten ist aufgrund ihrer Symmetrieeigenschaften besonders effizient herzustellen und leicht anzubringen. Eine Vorrichtung mit mehr als zwei Verriegelungsabschnitten stellt dementsprechend mehr Verriegelungspositionen bereit und ist für Anwendungen vorteilhaft, bei welchen höhere Verdrehsicherungskräfte bzw. eine bessere Verdrehsicherungswirkung erwünscht sind/ist. Eine Vorrichtung mit mehr als zwei Verriegelungsabschnitten kann beispielsweise durch Einführung einer weiteren Biege- oder Kippachse oder durch Bereitstellung unterschiedlich biegesteifer Abschnitte mit entsprechender Anordnung zusätzlicher Mittelansatzabschnitte und Verriegelungsabschnitte, die bei Ansatz eines Werkzeugs zu einem Mittenpunkt der Vorrichtung hin kippen, darstellbar. Flachförmigkeit des Ringteils fördert zum einen die zur Erzielung der erfindungsgemäßen Wirkung vorteilhafte Elastizität, und erlaubt darüber hinaus aufgrund der größeren Auflagefläche und der damit verbundenen verbesserten Reibschlüssigkeit bei Auflagerung eine verbesserte Sicherungswirkung im Verriegelungszustand.

Weiter bevorzugt weisen der erste und der zweite Verriegelungsabschnitt entlang der vorbestimmten Länge jeweils eine zu einer Mitte des flachförmigen Ringteils hin gerichtete Rasteinrichtung auf.

Eine solche Rasteinrichtung auf vorbestimmter Länge definiert vorteilhaft Haltekräfte der Vorrichtung im Benutzungszustand, und ermöglicht eine gute Anpassung an konstruktive und/oder bauliche Gegebenheiten ohne Verzicht auf die Grundfunktion einer verstellhemmenden Verriegelung.

Außerdem bevorzugt weist die Rasteinrichtung eine vorbestimmte Anzahl von Erhebungen und Einsenkungen auf, die dazu angeordnet sind, in der Verriegelungsstellung mit einer entsprechend vorbestimmten Anzahl von Erhebungen und Einsenkungen außerhalb der Vorrichtung in gegen selbsttätige Verdrehung sicherndem Eingriff zu stehen.

Hierdurch kann vorteilhaft die Verriegelungsvorrichtung durch leichtes Zusammendrücken und dadurch Verkippen des Ringteils verriegelt und entriegelt werden. Art und Dimensionierung der Erhebungen und Einsenkungen kann dabei variieren, solange eine hinreichende Selbsthemmung bereitgestellt wird. Dem Grunde nach kann ein reibschlüssiges Ineinandergreifen der Erhebungen und Einsenkungen vermittels ausreichender Rauheit, gegebenenfalls unterstützt durch eine zusätzliche Vorspannung des Ringteils in Verriegelungsrichtung, genügen. In einer bevorzugten Ausgestaltung sind die Erhebungen und Einsenkungen als Segmente einer Innenverzahnung ausgebildet.

Bevorzugt bildet die Öffnung des Ringteils eine Ausnehmung zur Durchführung des schraubbaren Elements aus, sind jeweils zu der Öffnung hin gerichtete Wandungen des ersten und des zweiten Mittelansatzabschnitts dazu angeordnet, in der Entriegelungsstellung mit korrespondierenden Wandungen eines durchgeführten schraubbaren Elements eine Wirkverbindung auszubilden, und sind jeweils nach außen gerichtete Wandungen des ersten und des zweiten Mittelansatzabschnitts derart ausgebildet, dass sie druckkraftbeaufschlagt und/oder drehmomentbeaufschlagt eine Außenform des schraubbaren Elements verdrehmittelkonform derart ergänzen, dass an den Mittelansatzabschnitten das schraubbare Element und die Vorrichtung wirkverbunden verdrehbar sind.

Vorteilhaft bildet in dieser Ausführungsform der Kopfabschnitt des schraubbaren Elements nur eine Teilform einer werkzeugkonformen Gesamtaußenform aus, und ergänzt der Mittelansatzabschnitt diese Teilform um eine weitere Teilform zu der werkzeugkonformen Gesamtaußenform. Unter "werkzeugkonformer Gesamtaußenform" ist hierbei eine Form zu verstehen, wie sie üblicherweise für den Gebrauch eines üblichen Werkzeugs vorliegt. Ist das Werkzeug beispielsweise ein Gabelschlüssel oder ein Steckschlüssel mit Innenmehrkant (beispielsweise Sechskant), ist die werkzeugkonforme Gesamtaußenform ebenfalls ein entsprechender Mehrkant (Sechskant). Insbesondere bei einem Sechskant kann die Teilform des Kopfabschnitts in diesem Fall zu einem Vierkant oder einem unregelmäßigen Sechskant mit ungleichen Kantenlängen reduziert sein, und ergänzt der Mittelansatzabschnitt diejenigen Segmente, die zu einem regelmäßigen Sechskant mit gleich langen Kanten fehlen. Dabei liegen bei Werkzeugansatz gegenüberliegende Flächen der Teilformen drehmoment- und kraftschlüssig aneinander an und ermöglichen so eine Verdrehung der resultierenden Gesamtaußenform ohne Durchrutschen bzw. ohne Relativbewegung der Teilflächen zueinander.

Auch bevorzugt ist zumindest eine Wandung des ersten und des zweiten Mittelansatzabschnitts, die sich bezogen auf den Ringteil in der zweiten Richtung erstreckt, in der Verriegelungsstellung um einen vorbestimmten Winkel gegenüber der zweiten Richtung zum Außenumfang hin geneigt, und sind der erste und der zweite Mittelansatzabschnitt durch eine an nach außen gerichteten Wandungen desselben angreifende Druckkraft auslenkbar und den vorbestimmten Winkel zu der zweiten Richtung hin verkleinernd in die Entriegelungsstellung verkippbar.

Vorteilhaft wird hierdurch eine funktionelle Dreidimensionalität der Vorrichtung geschaffen, die bei kleinstmöglichen Abmessungen und damit kleinstmöglichem Maßzuwachs gegenüber einem schraubbaren Element ohne Vorrichtung eine gute Druckkrafteinleitung in die Vorrichtung sowie deren Umsetzung in eine Auslenkung des Mittelansatzabschnitts bei gleichzeitig zuverlässiger Verriegelungswirkung bereitstellt. Durch die Neigung der Wandung des Mittelansatzabschnitts entsteht in der Verriegelungsstellung ein sich ausgehend vom Ringteil nach oben aufweitender Spalt zwischen den zugeordneten Flächen der einzelnen Teilformen. Bei Werkzeugansatz und dadurch Krafteinleitung kippt der Mittelansatzabschnitt zu dem Kopfabschnitt hin, wodurch der Spalt verkleinert wird. Da der Mittelansatzabschnitt über den dahinter liegenden Ringteil biegesteif mit dem zugeordneten Verriegelungsabschnitt verbunden ist, wird durch das Kippen des Mittelansatzabschnitts der Verriegelungsabschnitt angehoben und mit in die Entriegelungsstellung gekippt.

Noch bevorzugt sind der erste und der zweite Mittelansatzabschnitt so ausgeformt, dass sie eine Außenform des schraubbaren Elements zu einer Innenform eines Verdrehmittels ergänzen und/oder vervollständigen.

Vorteilhaft kann auf diese Weise eine Vielfalt von Ausführungsformen bereitgestellt werden. Es ist so beispielsweise möglich, ein standardisiertes schraubbares Element mit einem hinzufügend ausformenden Mittelansatzabschnitt speziell zu ergänzen, wobei die Ergänzung für die Verwendung eines standardisierten oder auch eines speziellen Werkzeugs ausgelegt sein kann, oder eine Kombination aus speziell ausgeformtem schraubbaren Element und daran angepasstem Mittelansatzabschnitt vorzusehen. Auslegungsabhängig kann so definiert werden, ob eine Verdrehung mit üblichem Werkzeug oder nur mit Spezialwerkzeug bzw. codiertem Werkzeug möglich sein soll.

Ferner bevorzugt ist die Vorrichtung aus einem biegesteifen Werkstoff hergestellt, weist vermittels der ersten und der zweiten biegeelastischen Ausformung eine Biegeelastizität um die durch die erste und die zweite biegeelastische Ausformung verlaufende Achse auf, nimmt druckkraftbeaufschlagt unter Verkippung um die Achse die Entriegelungsstellung ein, in welcher die Vorrichtung zusammen mit dem schraubbaren Element verdrehbar ist, und nimmt druckkraftlos und um die Achse selbststellend die Verriegelungsstellung ein, in welcher die Vorrichtung selbsthemmend gegen eine Verdrehung des schraubbaren Elements sichert.

Besonders vorteilhaft führt in diesem Fall bereits das Ansetzen eines Werkzeugs zur Entriegelung der Vorrichtung, während ein Entfernen des Werkzeugs unmittelbar ein sicheres Halten der erreichten Position in der Verriegelungsstellung gewährleistet.

Dazu bevorzugt ist die Vorrichtung aus einem Kunststoff hergestellt.

Kunststoff bietet den Vorteil, leicht und kostengünstig in der Herstellung zu sein. Kunststoff kann farbcodiert und/oder mit Markierungen versehen werden. Er erlaubt die einstückige Herstellung der Vorrichtung durch gezeigt bekannte Gießverfahren mit definierbaren Eigenschaften, ist leicht (nach)bearbeitbar, und im Störfall in Grenzen reparabel, beispielsweise bedingt klebbar und/oder versteifbar, etwa bei Bruch. Es besteht jedoch keine grundsätzliche Beschränkung auf Kunststoff.

Eine Anordnung zur Verriegelung eines schraubbaren Elements beinhaltet die vorstehend aufgezeigte Vorrichtung, das schraubbare Element, wobei das schraubbare Element eine Außenform mit zumindest zwei Flächen aufweist, die zu der Öffnung hin gerichteten Wandungen der Mittelansatzabschnitte derart korrespondieren, dass die zumindest zwei Flächen der Außenform des schraubbaren Elements zwischen den Wandungen der Mittelansatzabschnitte aufgenommen sind und eine Relativdrehung des schraubbaren Elements gegenüber der Vorrichtung unterbunden ist; und eine ringförmige Einrasteinrichtung, die an einem das schraubbare Element führenden und/oder aufnehmenden Lagerteil verdrehfest angeordnet ist und entlang der Ringform eine Vielzahl von Erhebungen und Einsenkungen aufweist, die den Erhebungen und Einsenkungen der Rasteinrichtung der Vorrichtung so zugeordnet sind, dass die Erhebungen und Einsenkungen in der Verriegelungsstellung ineinandergreifen.

### Zeichnung

Die Erfindung wird nachstehend anhand eines Ausführungsbeispiels unter Bezugnahme auf die beigefügte Zeichnung näher beschrieben. Es zeigen vereinfacht:
- Fig.1: eine Querschnittsdarstellung eines bekannten Federspeicherbremszylinders mit einer Notlöseeinrichtung;
- Fig.2: einen vergrößerten Ausschnitt der Notlöseeinrichtung von Fig.1, der anstelle der in Fig. 1 gezeigten Anordnung eine Vorrichtung und eine Anordnung bzw. ein System zur Verriegelung schraubbarer Elemente gemäß einer bevorzugten Ausführungsform der Erfindung darstellt;
- Fig. 3: eine perspektivische Darstellung eines aus einem schraubbaren Teil und einer Vorrichtung zur Verriegelung des schraubbaren Elements bestehenden Systems gemäß der bevorzugten Ausführungsform der Erfindung;
- Fig. 4: eine Vorderansicht der Vorrichtung zur Verriegelung eines schraubbaren Elements gemäß der bevorzugten Ausführungsform der Erfindung, und
- Fig. 5: eine Rückansicht der Vorrichtung zur Verriegelung eines schraubbaren Elements gemäß der bevorzugten Ausführungsform der Erfindung.

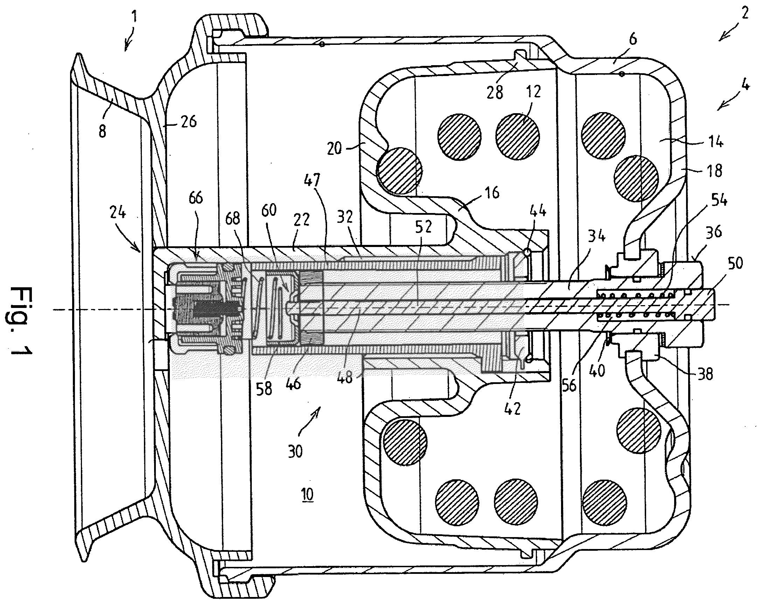

Aufgrund der Symmetrieeigenschaften sind in den Figuren 1 bis 5 einmalig mit Bezugszeichen bezeichnete Elemente, die sich funktions- und wesensgleich mit gegebenenfalls abweichender Orientierung andernorts finden, nicht notwendigerweise nochmals mit Bezugszeichen versehen. Es versteht sich jedoch, dass derartige, einander entsprechende Elemente mit denselben Bezugszeichen versehbar sind.

### Beschreibung einer bevorzugten Ausführungsform der Erfindung

Eine bevorzugte Anwendung der Vorrichtung und des Systems zur Verriegelung schraubbarer Elemente erfolgt beispielsweise bei einem Federspeicher bzw. Federspeichergehäuse eines Federspeicherbremszylinders für eine Bremsanlage eines Fahrzeugs, insbesondere eines Nutzfahrzeugs.

Ein derartiger Federspeicherbremszylinder weist üblicherweise ein Gehäuse auf, in welchem ein Federspeicherbremskolben geführt ist, der den Innenraum des Gehäuses in eine druckbeaufschlagbare Federspeicherbremskammer und eine eine Speicherfeder aufnehmende Federkammer unterteilt. In der Federkammer ist die Speicherfeder so angeordnet, dass sie den Federspeicherbremskolben in Richtung zur Federspeicherbremskammer vorspannt. Damit ein abgestelltes bzw. gebremstes Fahrzeug, in welchem der Federspeicherbremszylinder angeordnet ist, bewegt werden kann, wird die Federspeicherbremskammer derart mit Druckluft beaufschlagt, dass der Federspeicherbremskolben entgegen der Federkraft der Speicherfeder verschoben wird. Dadurch gelangt eine mit dem Federspeicherbremskolben gekoppelte Bremseinrichtung außer Eingriff mit einer Bremsscheibe oder dergleichen, so dass das Fahrzeug nicht weiter gebremst ist. Für Bremsbetätigungen während der Fahrt kann ein derartiger Federspeicherbremszylinder in bekannter Weise mit einem Betriebsbremszylinder gekoppelt sein.

Kommt es nun aufgrund eines Druckabfalls im System zu einer wesentlichen Reduzierung des Luftdrucks in der Federspeicherbremskammer, wird der Federspeicherbremskolben aufgrund der Vorspannung der Speicherfeder derart in Richtung zur Federspeicherbremskammer verschoben, dass die mit dem Federspeicherbremskolben gekoppelte Bremseinrichtung greift und eine Bremsung des Fahrzeugs ausführt. Damit soll beispielsweise bei einem Leitungsabriss der Bremsdruckleitung während der Fahrt zuverlässig verhindert werden, dass ein Nutzfahrzeug ungebremst weiterfährt und somit schwer kontrollierbar wird. Diese Zwangsbremsung bei mangelnder Druckluftzufuhr wird zudem auch bei über längere Zeit abgestellten Anhängern etc. genutzt, damit ein unbeabsichtigtes Wegrollen dieser Fahrzeuge verhindert werden kann.

Die somit durch die mechanische Speicherfeder im Federspeicherbremszylinder in derartigen Fällen ausgeübte Bremswirkung soll jedoch beispielsweise zum Verschieben abgestellter Fahrzeuge oder zum Räumen einer aufgrund einer Panne blockierten Fahrspur wieder gelöst werden können, damit die betreffenden Fahrzeuge bewegt und z. B. Verkehrsbehinderungen aufgehoben werden können.

Da die vorhandene Druckluftversorgung hierbei jedoch häufig durch Leitungsabriss etc. beschädigt ist und nicht eingesetzt werden kann und auch keine ergänzende Druckluftversorgung vorhanden ist, ist es in der Praxis erforderlich, dass derartige Federspeicherbremszylinder eine mechanische Notlöseeinrichtung aufweisen. Diese ist üblicherweise mit einer Betätigungseinrichtung in Gestalt einer Gewindespindel versehen, die von außen zugänglich und drehbar betätigbar ist.

Diese Gewindespindel wirkt dabei in einer bekannten Bauweise mit einem in Axialrichtung feststehend am Gehäuse des Federspeicherbremszylinders angeordneten Abtriebelement, wie z. B. einer Mutter, zusammen, so dass eine Drehung der Gewindespindel eine lineare Verschiebung derselben bewirkt. Hierbei ist bei dieser konkreten Ausführungsform beispielsweise das in axialer Richtung innere Ende der Gewindespindel mit einem Überstand ausgebildet, der mit einer Anlagefläche am Federspeicherkolben in Anlage gebracht werden kann. Aufgrund der durch die Drehbewegung eingeleiteten linearen Versetzung der Gewindespindel in Axialrichtung kommt es somit zu einer ebenfalls linearen Verschiebung des Federspeicherkolbens entgegen der Vorspannkraft der Speicherfeder, so dass hierdurch die mit dem Federspeicherkolben zusammenwirkende Bremseinrichtung gelöst werden kann.

Diese Bauweise hat sich hinsichtlich ihrer Funktionalität in der Praxis bewährt. Allerdings weist sie den Nachteil auf, dass die Gewindespindel nicht derart schwergängig sein darf, dass sie für ein mechanisches Notlösen im Bedarfsfall manuell nicht betätigt werden kann. Bekannte Sicherungsmechanismen wirken aber zum einen einer bedarfsweise verlässlich manuellen Betätigung entgegen. Zum anderen darf sich die Gewindespindel zum mechanischen Notlösen auch nicht selbsttätig lösen oder verstellen können, beispielsweise durch im Betrieb des Fahrzeugs auftretende Erschütterungen oder Vibrationen, so dass eine ungesicherte Anordnung nicht zweckmäßig ist und einfache Sicherungsmaßnahmen, wie etwa eine einfache Sicherungsscheibe, fallweise nicht genügen können.

Fig.1 zeigt einen Ausschnitt eines bekannten kombinierten Betriebsbrems- und Federspeicherbremszylinders 1 (Kombibremszylinder) eines pneumatischen oder elektro-pneumatischen Bremssystems eines Nutzfahrzeugs. Dieses umfasst eine hier nicht gezeigte Betriebsbremsvorrichtung mit einem Betriebsbremszylinder mit einem Gehäuse, in dem ein pneumatisch beaufschlagbarer Betriebsbremskolben geführt ist, welcher über eine Betriebsbremskolbenstange beispielsweise eine Scheibenbremse des Nutzfahrzeugs betätigt.

Der Kombizylinder 1 umfasst weiterhin eine in Fig.1 sichtbare Federspeicherbremseinrichtung 2 mit einem Federspeicherbremszylinder 4 mit einem Gehäuse 6, an welches ein Flansch 8 derart angekoppelt ist, dass das Gehäuse 6 und der Flansch 8 eine im Wesentlichen abgeschlossene Einheit bilden. An den Flansch 8 kann beispielsweise der Betriebsbremszylinder angekoppelt werden. In dem Gehäuse 6 ist ein durch pneumatischen Druck in einer Federspeicherbremskammer 10 gegen die Federkraft einer Speicherfeder 12 in einer Federkammer 14 spannbarer Federspeicherbremskolben 16 geführt, durch welchen der Betriebsbremskolben in Bremszuspannrichtung beaufschlagbar ist. Diese Speicherfeder 12 stützt sich hierbei einerseits auf einem Boden 18 des Gehäuses 6 und andererseits an einem Kolbenteller 20 des Federspeicherbremskolbens 16 ab. Der Betriebsbremszylinder und der Federspeicherbremszylinder 4 bilden hintereinander koaxial angeordnet dann den Kombibremszylinder 1.

Eine Federspeicherbremskolbenstange 22 des Federspeicherbremskolbens 16 durchragt dichtend eine Durchgangsöffnung 24 in einer mit dem Flansch 8 einstückigen Trennwand 26 zwischen dem Federspeicherbremszylinder 4 und dem Betriebsbremszylinder und kann mit ihrer Stirnfläche am nicht gezeigten Betriebsbremskolben anschlagen. Überdies weist der Federspeicherbremskolben 16 noch einen Führungsabschnitt 28 auf, der umfangsseitig in einem Zylinderabschnitt des Gehäuses 6 abgedichtet geführt ist.

In bekannter Weise kann der Federspeicherbremskolben 16 gegen die Wirkung der Speicherfeder 12 durch Belüften der Federspeicherbremskammer 10 in Lösestellung gebracht werden. Weiterhin kann durch Belüften einer Betriebsbremskammer, welche sich zwischen der Trennwand 26 und dem Betriebsbremskolben erstreckt, Letzterer gegen die Wirkung einer sich einerseits am Betriebsbremskolben und andererseits an einer Stirnwand des Betriebsbremszylinders abstützenden Rückholfeder in Zuspannstellung gebracht werden.

Nicht zuletzt ist innerhalb der Federspeicherbremskolbenstange 22 wenigstens teilweise eine mechanische Notlöseeinrichtung 30 integriert, mit welcher die Federspeicherbremse bei Druckausfall not- oder hilfsgelöst werden kann. Mit Hilfe der Notlöseeinrichtung 30 ist ein mechanisches Notlösen der Federspeicherbremse durch manuelle äußere Einwirkung möglich. Die Notlöseeinrichtung 30 ist hierbei in dieser Ausführungsform zentrisch im Federspeicherbremszylinder 4 angeordnet und greift durch eine zentrale Öffnung des Gehäuses 6 in einen Hohlraum 32 der Federspeicherbremskolbenstange 22 ein. Sie weist hierbei eine Gewindespindel 34 auf, an deren äußerem Ende bei der bekannten Anordnung ein Sechskantkopf 36 als Werkzeugansatz zum Ansetzen des Werkzeugs in Form des Sechskantkopfs 36 einstückig ausgebildet und an die Gewindespindel 34 angeformt ist. Die Gewindespindel 34 durchgreift eine Buchse bzw. ein Lagerteil 38 des Gehäuses 6 derart, dass sie darin abgedichtet geführt ist, um eine Drehbewegung ausführen zu können. Gleichzeitig ist die Gewindespindel 34 durch eine Sicherungsscheibe 40 an einer axialen Bewegung gegenüber dem Gehäuse 6 gehindert. In dem Hohlraum 32 der Federspeicherbremskolbenstange 22 ist weiterhin ein Anlageabschnitt 42 des Kolbentellers 20 angeordnet, beispielsweise in Form einer durch einen Sicherungsring 44 gehaltenen Scheibe, gegen welche eine mit der Gewindespindel 34 verschraubbare Mutter 46 anlaufen und dadurch den Federspeicherbremskolben 16 in Richtung auf den Boden 18 des Gehäuses 6 zu, d.h. in Bremslöserichtung mitnehmen kann.

Die Gewindespindel 34 und der Sechskantkopf 36 wirken hierbei als eine Betätigungseinrichtung, die mit einer Übertragungseinrichtung in Gestalt der Mutter 46 zusammenwirkt. Diese ist mit dem Gewindegang der Gewindespindel 34 derart in Eingriff, dass eine Drehbewegung der Gewindespindel 34 in eine lineare Bewegung der Mutter 46 in Axialrichtung übertragen wird. Hierzu ist die hier als Sechskantmutter ausgeführte Mutter 46 formschlüssig in einem Führungsteil 47 im Hohlraum 32 der Federspeicherbremskolbenstange 22 so aufgenommen, dass sie sich nicht verdrehen kann.

Die Notlöseeinrichtung 30 weist ferner eine Indikatoreinrichtung auf. Diese enthält einen Indikatorstab 48, der einen Anzeigeabschnitt 50 und einen hiervon abgestuften Steuerabschnitt 52 mit kleinerem Durchmesser aufweist. Der Indikatorstab 48 besteht vorzugsweise aus wenigstens einem Kunststoff und durchgreift die Gewindespindel 34 mittig und ist darin derart abgedichtet geführt, dass eine Bewegung in Axialrichtung möglich ist. Hierbei ist der Indikatorstab 48 mittels einer Feder 54 gegenüber einem Stufenabschnitt 56 in der Gewindespindel 34 so vorgespannt, dass der Anzeigeabschnitt 50 nach außen gedrückt wird.

An dem vom Anzeigeabschnitt 50 fernen Ende des Steuerabschnitts 52 ist ein quer zur Axialrichtung angeordneter und als Anschlag dienender Anschlagkörper 58 vorhanden, der über die Gewindespindel 34 radial derart hinausragt, dass der äußere Rand des Anschlagkörpers 58 mit der Mutter 46 in Anlage gelangen kann. Der Anschlagkörper 58 ist mit dem Indikatorstab 48 durch eine mittels einer axialen Relativbewegung zwischen dem Indikatorstab 48 und dem Anschlagkörper 58 gefertigten lösbaren Rast- oder Clipsverbindung 60 formschlüssig verbunden.

Bei der Montage der Notlöseeinrichtung 30 wird zunächst bei zugespanntem Zustand der Federspeicherbremse, d.h. bei vom Boden 18 des Gehäuses 6 entferntem Federspeicherbremskolben 16 die Mutter 46 koaxial an den tassenförmigen Anschlagkörper 58 gesetzt. Sodann wird die Federspeicherbremskammer 10 des Federspeicherbremszylinders 4 belüftet, wodurch der sich Federspeicherbremskolben 16 in seine Löseendlage und die Federspeicherbremskolbenstange 22 zusammen mit dem tassenförmigen Anschlagkörper 58 und der Mutter 46 in Richtung auf das Ende der Gewindespindel 34 zu bewegt, bis die Mutter 46 am ersten Gewindegang der Gewindespindel 34 angreift. Sodann wird die Gewindespindel 34 von außerhalb des Gehäuses 6 verdreht, bis die Mutter 46 am Anlageabschnitt 42 des Kolbentellers 20 anliegt. Der Anschlagkörper 58 ist währenddessen durch die Federmittel 68 gegen das Ende der Gewindespindel 34 vorgespannt. Dann wird der Indikatorstab 48 linear nach innen geschoben, bis sein mit einem Ringbund versehenes Ende den Rand einer Aufnahmeöffnung des Anschlagkörpers 58 unter radial elastischer Aufweitung derselben passiert und dann diesen Rand hintergreifend die lösbare Rast- oder Clipsverbindung 60 zwischen dem Indikatorstab 48 und dem Anschlagkörper 58 herstellt. Hierbei ist der Anschlagkörper 58 gegen die vom Indikatorstab 48 ausgeübte Druckkraft durch die Federmittel 68 an der Federspeicherbremskolbenstange 22 abgestützt. Die Rückfederung des Anschlagkörpers 58 mittels der Federmittel 68 nach dem Durchdringen der im Durchmesser etwas kleineren Ausnahmeöffnung im Vergleich zum Durchmesser des Ringbunds unterstützt das Zustandekommen der Rastverbindung 60.

Zum Notlösen des Federspeicherbremszylinders durch die Notlöseeinrichtung 30, d.h. zum Aufheben der Bremswirkung der Federspeicherbremse wird der Sechskantkopf 36 der Gewindespindel 34 so verdreht, dass eine Seitenfläche der Mutter 46 an dem Anlageabschnitt 42 des Kolbentellers 20 anliegt und diesen im Zuge der Drehbewegung entgegen der Vorspannung der Speicherfeder 12 in Richtung zum Boden 18 des Gehäuses 6 zieht. Gemäß der Darstellung in Fig.1 ist der Anzeigeabschnitt 50 des Indikatorstabs 48 hierbei durch die Feder 54 so beaufschlagt, dass ein äußeres Ende hiervon nach außen über den Sechskantkopf 36 übersteht und dadurch anzeigt, dass der Federspeicherbremszylinder 4 notgelöst ist.

Soll nun die Federspeicherbremse wieder manuell zugespannt werden, so wird die Gewindespindel 34 mittels des Sechskantkopfs 36 derart gedreht, dass sich die Mutter 46 in Axialrichtung vom Boden 18 des Gehäuses 6 weg bewegt. Durch ein fortgesetztes Eindrehen der Mutter 46 in die Federspeicherbremskolbenstange 22 gelangt diese schließlich in Eingriff mit dem Anschlagkörper 58 der Indikatoreinrichtung und erzwingt dadurch eine lineare Verschiebung des Indikatorstabs 48 entgegen der Federkraft der Feder 54. Der Anzeigeabschnitt 50 wird dadurch derart relativ zum Sechskantkopf 36 bzw. dem äußeren Ende der Gewindespindel 34 bewegt, dass er eingezogen wird, bis er im wesentlichen bündig hierzu angeordnet ist. Hieran kann ein Benutzer dann erkennen, dass der Federspeicherbremszylinder 1 nicht manuell notgelöst ist.

Aufgrund der Vorspannung durch die Speicherfeder 12 folgt der Kolbenteller 20 dieser Bewegung, wobei die Seitenfläche der Mutter 46 in Anlage zum Anlageabschnitt 42 am Kolbenteller 20 bleibt. Mit dem Kolbenteller 20 bewegt sich auch die Federspeicherbremskolbenstange 22 vom Boden 18 des Gehäuses 6 weg, so dass eine Bremskraft auf die hier nicht dargestellte Betriebsbremseinrichtung jenseits des Flansches 8 ausgeübt wird. Sobald die maximale Bremskraft anliegt, folgt der Kolbenteller 20 der Mutter 46 jedoch nicht weiter.

Der Federspeicherbremszylinder 1 ist dann in der normalen Betriebsstellung, in der die Bremsbetätigung entweder durch Druckluftbeaufschlagung, oder falls keine Druckluft vorhanden ist, eine Bremswirkung durch die Speicherfeder 12 ausgelöst wird. Für einen normalen pneumatischen Betrieb des Federspeicherbremszylinders 2 wird durch einen hier nicht dargestellten Lufteinlass Druckluft in die Federspeicherbremskammer 10 derart gesteuert eingeführt, dass diese Druckluft die Federkraft der Speicherfeder 12 überwindet und so wahlweise, in Abhängigkeit von der Höhe des Drucks, die Bremse löst oder betätigt.

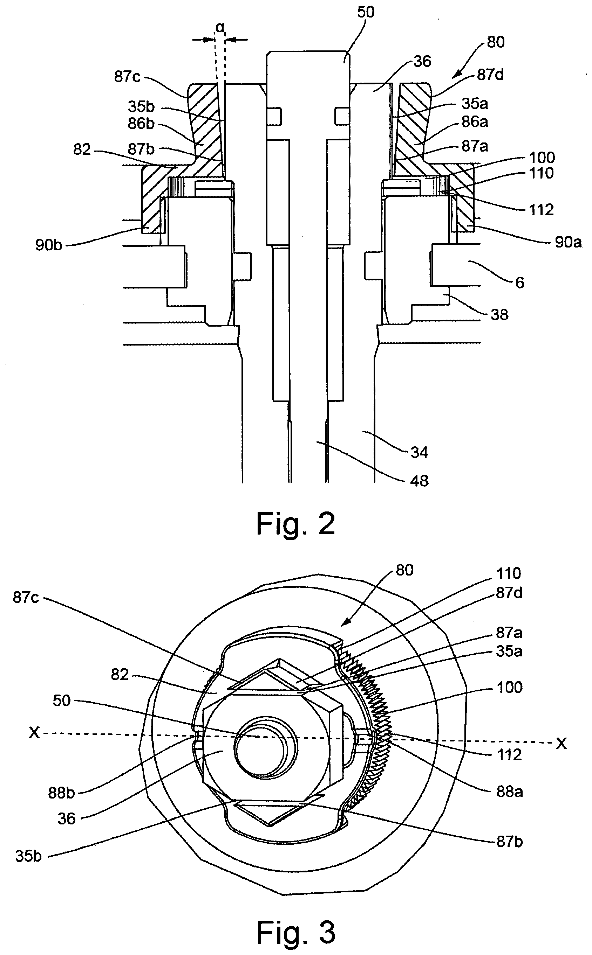

Fig. 2 ist ein vergrößerter Ausschnitt der Notlöseeinrichtung von Fig.1, der schematisch und im Schnitt anstelle der in Fig. 1 gezeigten Anordnung eine Vorrichtung und eine Anordnung zur Verriegelung schraubbarer Elemente gemäß einer bevorzugten Ausführungsform der Erfindung darstellt.

Anders als bei der in Fig. 1 gezeigten, bekannten Anordnung ist gemäß einer bevorzugten Ausführungsform der Vorrichtung und Anordnung zur Verriegelung eines schraubbaren Elements der am äußeren Ende der Gewindespindel 34 angeformte Mehrkantkopf, bevorzugt Sechskantkopf, 36 an seiner in axialer Richtung nach oben bzw. vom Federspeicherbremszylinder weg weisenden Oberfläche und zumindest an zwei Seitenteilflächen 35a, 35b des Mehrkantkopfs 36 abgenommen bzw. verkürzt, d. h. an wenigstens zwei Seitenteilflächen 35a, 35b, vorzugsweise zueinander parallelen Seitenflächen, desselben ist Material abgetragen.

Um den Mehrkantkopf 36 ist eine Vorrichtung 80 zur Verriegelung des Mehrkantkopfs 36 als das schraubbare Element angeordnet, die einstückig ausgebildet ist und im Wesentlichen aus (von oben nach unten) zumindest einem ersten und einem zweiten Mittelansatzabschnitt 86a, 86b, einem flachförmigen Ringteil 82 mit einem Innenumfang 82a und einem Außenumfang 82b, und zumindert einem ersten und einem zweiten Verriegelungsabschnitt 84a, 84b mit jeweils einer Rasteinrichtung 90a, 90b, der innenseitig, d.h. zur Mittelachse der Gewindespindel 34 weisend, mit Erhebungen und Einsenkungen 110 versehen ist, besteht.

Wie in Fig. 2 gezeigt ist, liegt der bevorzugt flachförmige Ringteil 82 in einer Ebene, und erstrecken sich bezogen auf diese Ebene der erste und der zweite Verriegelungsabschnitt 84a, 84b in eine erste, zu der Ebene orthogonale Richtung, und der erste und der zweite Mittelansatzabschnitt 86a, 86b in eine zweite, zu der Ebene ebenfalls im Wesentlichen orthogonalen und zu der ersten Richtung entgegengesetzte Richtung.

"Im Wesentlichen" deshalb, weil die Erstreckung des ersten und des zweiten Mittelansatzabschnitts 86a, 86b in der Höhenrichtung grundsätzlich orthogonal zu der Ebene verläuft, zumindest eine Seitenfläche 87c, 87d des ersten bzw. des zweiten Mittelansatzabschnitts 86a, 86b jedoch um einen Winkel α aus der Höhenrichtung nach außen hin geneigt ist, so dass ein sich in Höhenrichtung nach oben aufweitender Spalt zwischen dem Mehrkantkopf 36 und dem ersten und den zweiten Mittelansatzabschnitt 86a, 86b bzw. dessen Seitenflächen 87c, 87d bereitgestellt ist.

Die Vorrichtung oder Verriegelungsvorrichtung 80 liegt weiters im Wesentlichen plan auf einem rundförmigen Scheibenelement auf, das konzentrisch und verdrehfest um die Mittelachse der Gewindespindel 34 angeordnet ist und eine ringförmige Einrasteinrichtung 100 bildet, die an ihrem Außenumfang mit zu Erhebungen und Einsenkungen an zumindest einer ersten und einer zweiten Rasteinrichtung 90a, 90b an dem ersten bzw. zweiten Verriegelungsabschnitt 84a, 84b korrespondierenden Erhebungen und Einsenkungen 112 versehen ist.

"Im Wesentlichen plan" ist hierin so zu verstehen, dass entlang des Ringteils 82 in Höhenrichtung konvex zu der Einrasteinrichtung 100 (nach unten) vorstehend noch zumindest eine (noch zu beschreibende) erste und eine zweite biegeelastische Ausformung vorgesehen sein kann, die gegebenenfalls und abhängig von einer tatsächlichen Ausführungsform die untere Ringteilfläche gegenüber der oberen Oberfläche der Einrasteinrichtung geringfügig abheben bzw. beabstanden kann. Eine funktionelle Auswirkung oder gar Einschränkung entsteht hieraus jedoch nicht.

Idealerweise weisen ein außenseitiger Umfang der Einrasteinrichtung 100 und ein innenseitiger Umfang des ersten und des zweiten Verriegelungsabschnitts 84a, 84b keine Überdeckung (wie in Fig. 2 gezeigt) bzw. eine Überdeckung nur im Umfang eines hinreichenden Eingriffs der jeweiligen Erhebungen und Einsenkungen derselben auf. In diesem Fall kann ein Einsetzen der Verriegelungsvorrichtung 80 werkzeuglos manuell, im Fall der Gewindespindel 34 z. B. nach einer erfolgten Grundeinstellung derselben, erfolgen, da durch eine von oben auf die Verriegelungsvorrichtung 80 wirkende Druckkraft etwa von Fingern einer Hand eine für einen Eingriff der Erhebungen und Einsenkungen ineinander ausreichend elastische Verformung der Verriegelungsvorrichtung 80 erzeugt, diese sich sodann am Außenumfang des ringförmigen Scheibenelements als der Einrasteinrichtung 100 weiter abwärts bewegt, und sich schließlich nach Erreichen einer Endlage bei Wegnehmen der Druckkraftbeaufschlagung selbsttätig in die entspannte Ruhelage bzw. Einraststellung oder Verriegelungsstellung zurückkehrt. In anderen Worten kann durch Ausüben einer nach unten gerichteten Kraft auf die Verriegelungsvorrichtung 80 diese mühelos aufgesteckt und eingerastet ("aufgeklipst") werden.

Die Verriegelungswirkung der Verriegelungsvorrichtung 80 kann in Zusammenwirkung mit der Einrasteinrichtung 100 erzielt werden. Dazu ist die Einrasteinrichtung 100 vorzugsweise radial mit bevorzugt einer Vielzahl von zu den Erhebungen und Einsenkungen, oder Ausnehmungen, 110 der Rasteinrichtungen 90a, 90b an den Verriegelungsabschnitten 84a, 84b korrespondierenden und die Verriegelungswirkung in vorbestimmt fein abgestuftem Abstand auflösenden Erhebungen und Einsenkungen bzw. Ausnehmungen 112 versehen.

Bevorzugt sind hierbei Abstand und Dimensionierung jeweils korrespondierender Erhebungen und Einsenkungen bzw. Ausnehmungen 110, 112 umlaufend derart fein abgestuft, dass eine Selbsteinrastwirkung bereitgestellt wird. Wird während des Verdrehens des Mehrkantkopfs 36 zusammen mit der Verriegelungsvorrichtung 80 mit aufgesetztem Werkzeug, d. h. in einem noch nicht verriegelten Zustand, eine gewünschte Endstellung zumindest näherungsweise erreicht und in dieser Endstellung das Werkzeug abgezogen, kann es vorkommen, dass eine Erhebung an der Einrasteinrichtung 100 auf einer Erhebung an der Rasteinrichtung 90a, 90b zu liegen kommt und somit nicht unmittelbar in die nächstliegende Auslenkung eingreifen und in diese einrasten kann. Die Erhebungen und Einsenkungen bzw. Ausnehmungen 110, 112 sind nun derart fein abgestuft beabstandet, dass bereits eine geringfügige weitere Verdrehung des Mehrkantkopfs 36 und der Verriegelungsvorrichtung 80, beispielsweise ausgelöst durch Vibrationen oder Krafteinwirkungen anderweitig geeigneter Art im nachfolgenden Betrieb des Fahrzeugs, genügt, die spitz auf spitz stehende Erhebung in eine jeweils nächstliegende Einsenkung gleiten und dort einrasten zu lassen. Es ist daher nicht in jedem Falle notwendig, die Einrastwirkung der Verriegelungsvorrichtung 80 nach Abschluss der Einstellung, beispielsweise einer Grundeinstellung oder einer Einstellung auf einen vorbestimmten Wert eines Anzugsdrehmoments oder einer (nicht gezeigten) Skala an dem Lagerteil 38, des Mehrkantkopfs 36 zu überprüfen, da die Selbsteinrastung bzw. selbsttätige Verriegelung automatisch dazu führt, dass erforderlichenfalls bei nächster Gelegenheit und in einem über die Auflösung der Erhebungen und Einsenkungen 110, 112 definierbaren Toleranzbereich eine Verriegelungswirkung herbeigeführt wird bzw. eintritt.

In der Praxis hat dies unter anderem den Vorteil, dass es beispielsweise genügen kann, eine Markierung an dem Mehrkantkopf 36 hinreichend genau auf eine Markierung an etwa dem Lagerteil 38 oder dergleichen zu stellen und sodann das Werkzeug abzuziehen. Die Verriegelungswirkung tritt entweder unmittelbar ein, oder erforderlichenfalls bei nächster Gelegenheit. Die dazu erforderliche zusätzliche Verdrehung kann durch geeignete Auswahl der Anzahl von Erhebungen und Einsenkungen bzw. Ausnehmungen 110, 112 und deren Beabstandung definiert und in einem gewünschten Zulässigkeitsbereich gehalten werden.

Es wird angemerkt, dass die Erhebungen und Einsenkungen bzw. Ausnehmungen 112 nicht notwendigerweise an einem separaten, in das Lagerteil 38 einsetzbaren oder auf das Lagerteil 38 aufsetzbaren, beispielsweise flachen scheibenförmigen Element als Einrasteinrichtung 100 bereitgestellt sein müssen, sondern auch direkt in das Lagerteil 38 eingeformt sein können bereitgestellt werden können.

Während eine Vorrichtung zur Verriegelung schraubbarer Elemente bereits grundsätzlich durch die Verriegelungsvorrichtung 80 ausgebildet wird, sofern ein schraubbares Element und ein Lagerbereich und/oder Führungsbereich für dasselbe geeignet ausgestaltet sind (beispielsweise können schraubbare Elemente und solche Bereiche grundsätzlich zur Verwendung mit der Verriegelungsvorrichtung 80 vorgesehen sein, ohne dass die Verwendung der Verriegelungsvorrichtung in jedem Falle unmittelbar erfolgen muss), wird ein System bzw. eine Anordnung zur Verriegelung schraubbarer Elemente durch Zusammenwirken eines zur Anwendung der Verriegelungsvorrichtung ausgeformten schraubbaren Elements, die Verriegelungsvorrichtung selbst und ein mit Ausnehmungen für den Eingriff der Verriegelungsvorrichtung darin versehenes, vorzugsweise selbst drehgesichertes Lager- oder Verriegelungsteil geschaffen. Im letztgenannten Fall entsteht insbesondere zusätzlich die Möglichkeit der Nachrüstung bereits bestehender Schraubverbindungen.

Der Werkstoff der Verriegelungsvorrichtung 80 ist nicht auf ein bestimmtes Material beschränkt, da bei einer Verdrehsicherung des schraubbaren Elements in der Regel nur geringe Kräfte (etwa nur Seitenkräfte um die axiale Richtung) auf die Verriegelungsvorrichtung 80 einwirken. Insoweit sind zur Herstellung der Verriegelungsvorrichtung 80 ausreichend bruchsichere und/oder ausreichend elastische und dennoch ausreichend steife bzw. biegesteife Kunststoffe geeignet. Alternativ kann die Verriegelungsvorrichtung 80 auch mit beispielsweise einem biegegeformten und teilergänzten Stanzteil aus Metall, etwa einem bei Verformung ausreichende Elastizität und Rückstellkraft, mithin eine entsprechende Federwirkung bei ebenfalls ausreichender Biegesteifigkeit, bereitstellenden Blechmaterial, dargestellt werden. Insoweit die Teil der Einrasteinrichtung 100 in dem Lagerteil 38 bildenden Erhebungen und Einsenkungen 112 nicht einstückig mit dem Lagerteil 38 ausgeformt sind, in anderen Worten direkt an diesem eingeformt sind, besteht für den Werkstoff, in dem die Erhebungen und Einsenkungen 110, 112 erzeugt sind, ebenfalls keine notwendige Beschränkung auf ein bestimmtes Material. Bei Verwendung eines Verriegelungsrings kann dieser daher beispielsweise auch aus z.B. einem Kunststoff bestehen.

Fig. 3 zeigt unter Verwendung derselben Bezugszeichen für in den Fig. 1 und 2 bereits gezeigte Elemente eine perspektivische Darstellung eines aus einem schraubbaren Teil und einer Vorrichtung zur Verriegelung des schraubbaren Elements bestehenden Systems gemäß einer bevorzugten Ausführungsform.

Gemäß der Ausführungsform nach Fig. 3, die die Verriegelungsstellung zeigt, ragt der Anzeigeabschnitt 50 aus einer Mutter oder Schraube, die den Mehrkantkopf 36 bildet. Der Mehrkantkopf 36 ist von der Außenform eines regelmäßigen Sechsecks ausgehend an zwei seiner Seitenflächen 35a, 35b abgeflacht. Den abgeflachten Seitenflächen 35a, 35b liegen Seitenflächen 87a, 87b des ersten und des zweiten Mittelansatzabschnitts 86a, 86b durch einen Spalt, der durch die Neigung des ersten und des zweiten Mittelansatzabschnitts 86a, 86b um den Winkel α gegenüber der Achsenrichtung der Gewindespindel 34 gebildet wird, beabstandet gegenüber. Ein nennenswertes Verdrehspiel des Mehrkantkopfs 36 besteht nicht, da das Spaltmaß am Fuß des ersten und des zweiten Mittelansatzstücks 86a, 86b bzw. auf der Höhe der oberen Oberfläche des Ringteils 82 aufgrund der Neigung der Seitenwände 87a, 87b gegen Null geht und in der Verriegelungsstellung zusätzlich die Rastung an den Verriegelungsabschnitten 84a, 84b greift. In der gezeigten Konfiguration verhindert somit die Verriegelungsvorrichtung 80 ein unerwünschtes Verdrehen des Mehrkantkopfs 36.

Anhand Fig. 3 wird darüber hinaus auch die Funktionsweise der Verriegelungsvorrichtung 80 deutlich. Die Verriegelungsvorrichtung 80 weist an ihrem Ringteil 82 beidseitig entlang einer durch ihre geometrische Mitte verlaufende Achse X zumindest eine erste und eine zweite biegeelastische Ausformung 88a, 88b auf. Die biegeelastische Ausformung 80a, 80b kann die Verriegelungsvorrichtung 80 aufspreizend vorspannen, um die Verriegelungswirkung bzw. Haltewirkung zu erhöhen, oder in der Ruhelage vorspannungsfrei sein, so dass der Ringteil 82 in der Verriegelungsstellung spannungsfrei liegt. In beiden Fällen ist gewährleistet, dass die Erhebungen und Einsenkungen 110, 112 zumindest reibschlüssig und bevorzugt formschlüssig gegen Verdrehung sichernd in Eingriff stehen.

Bei Anwendung eines Werkzeugmittels an dem Mittelansatzabschnitt 86a, 86b, beispielsweise bei Aufstecken eines Steckschlüssels auf den durch den Mehrkantkopf 36 und die diesen zu einem Sechseck ergänzenden Mittelansatzabschnitte 86a, 86b werden die Mittelansatzabschnitte 86a, 86b über ihre außenliegenden Seitenflächen 87c, 87d mit einer Druckkraft beaufschlagt, die sie den Spalt verkleinernd bzw. schließend zu dem Mehrkantkopf 36 hin drückt und an diesen anlegend auslenkt. Durch diese Auslenkung wird die gesamte Verriegelungsvorrichtung 80 an den biegeelastischen Ausformungen 88a, 88b klappend verkippt, so dass sich die Mittelansatzabschnitte 86a, 86b aufeinander zu bewegen und aufgrund ihrer starren Kopplung mit den Verriegelungsabschnitten 84a, 84b über die äußeren Abschnitte des Ringteils 82 die Verriegelungsabschnitte 84a, 84b mit verkippen und dadurch soweit anheben, dass die Erhebungen und Einsenkungen 110, 112 außer Eingriff geraten.

Mit den Erhebungen und Einsenkungen 110, 112 außer Eingriff befindet sich die Verriegelungsvorrichtung sodann in einem Entriegelungszustand, in dem mit dem aufgesetzten Werkzeug der Mehrkantkopf 36 zusammen mit der Verriegelungsvorrichtung 80 verdrehbar ist. Wird nach erfolgter Verdrehung das Werkzeug entfernt, d.h. abgezogen, stellt sich die Verriegelungsvorrichtung 80 aufgrund der eine Federwirkung entfaltenden Biegeelastizität der biegeelastischen Ausformungen 88a, 88b selbsttätig in die Verriegelungsstellung zurück.

Es wird angemerkt, dass die biegeelastischen Ausformungen 88a, 88b auf der Oberfläche der Einrasteinrichtung 100 die Wirkung eines Gleitlagers entfalten können, indem nur sie auf der Oberfläche der Einrasteinrichtung 100 aufliegen, die übrige untere Oberfläche des Ringteils 82 dazu beabstanden, und somit eine leichtere Verdrehbarkeit der Vorrichtung bzw. des Systems unterstützen, oder beispielsweise alternativ auch berührungslos in einer (nicht gezeigten) Ausnehmung in der Einrasteinrichtung 100 aufgenommen sein können, so dass die untere Oberfläche des Ringteils 82 größerflächig auf der oberen Oberfläche der Einrastvorrichtung 100 aufliegt und reibschlüssig die Verriegelungswirkung erhöht.

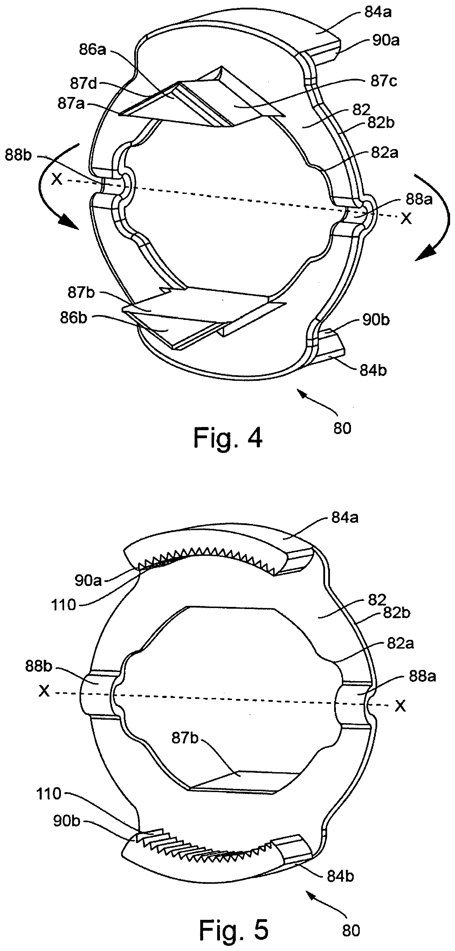

Fig. 4 zeigt unter Verwendung derselben Bezugszeichen für in den Fig. 1 bis 3 bereits gezeigte Elemente eine Vorderansicht der Vorrichtung zur Verriegelung eines schraubbaren Elements gemäß der bevorzugten Ausführungsform.

Wie in Fig. 4 gezeigt ist, ist die Verriegelungsvorrichtung 80 gemäß der vorliegenden Ausführungsform im Wesentlichen achsensymmetrisch, d.h. symmetrisch zur Achse X, aufgebaut. Die Erfindung ist jedoch nicht darauf beschränkt, sondern es ist auch eine Mehrachsensymmetrie mit einer dazu entsprechenden Mehrzahl und/oder Unterteilung bestandteilbildender Strukturen denkbar. Beispielsweise ist eine Ausführung mit vier Verriegelungsabschnitten und vier Mittelansatzabschnitten über den Ringteilumfang verteilt in gleichen oder verschiedenen Höhenlagen der Verriegelungsabschnitte denkbar, mit entsprechend vier dazwischen liegenden biegeelastischen Ausformungen. Da es sich um eine verdrehbare Vorrichtung handelt, ist lediglich sicherzustellen, dass zugeordnete Segmente der Verriegelungsvorrichtungen auf denselben Kreislinien zu liegen kommen.

Fig. 4 ebenfalls entnehmbar ist die in dieser Ausführungsform dreieckförmige Ausgestaltung der Mittelansatzabschnitte 86a, 86b an ihrer Position am Innenumfang 82a des Ringteils 82, wobei die Dreieckform den komplementär unregelmäßig geformten Mehrkantkopf 36 zu einer regelmäßigen Mehreckform, hier der Sechseckform, ergänzt, und die kreisbogensegmentförmige Ausgestaltung der Verriegelungsabschnitte 84a, 84b am Außenumfang 82b des Ringteils 82. Die positionelle Anordnung dieser Komponenten in der Verriegelungsvorrichtung 80 führt in Verbindung mit der Kipp- bzw. Klappachse X, entlang welcher die biegeelastischen Ausformungen 88a, 88b in dem Ringteil 82 angeordnet sind, zu einer Hebelwirkung vermittelt der Mittelansatzabschnitte 86a, 86b auf die Verriegelungsabschnitte 84a, 84b. Die Übersetzung dieser Hebelwirkung sowie der dadurch darstellbare Hub an den Verriegelungsabschnitten 84a, 84b ist durch entsprechende Dimensionierung des Ringteils 82 und der mit diesem zusammenwirkenden Teile konfigurierbar.

Es wird angemerkt, dass in dieser Ausführungsform bereits der Innenumfang 82a des Ringteils 82 der Außenform des Mehrkantkopfs 36 folgt, wodurch die Stabilität der Verriegelungsvorrichtung 80 gegenüber beispielsweise einem Abreißen der Mittelansatzabschnitte 86a, 86b erhöht ist, und dass wie in Fig. 4 angedeutet der Ringteil 82 gegebenenfalls mehrlagig ausgebildet sein kann, um eine definierte Federwirkung bzw. ein definiertes Stellmoment zu erhalten oder beispielsweise einseitig eine abrieb- und/oder verschleißfestere Oberfläche bereitzustellen. Zur weiteren Unterstützung der Federwirkung und/oder des Stellmoments, und/oder bei größeren Verriegelungsvorrichtungen 80 bzw. auftretenden Kräften, kann darüber hinaus eine (nicht gezeigte) separate Feder in den biegeelastischen Ausformungen 88a, 88b vorgesehen sein.

Fig. 5 zeigt unter Verwendung derselben Bezugszeichen für in den Fig. 1 bis 4 bereits gezeigte Elemente eine Rückansicht der Vorrichtung zur Verriegelung eines schraubbaren Elements gemäß der bevorzugten Ausführungsform. Noch hervorzuheben ist in dieser Darstellung die Anordnung der Erhebungen und Einsenkungen 110 an den Verriegelungsabschnitten 84a, 84b, die hier in Form einer Innenverzahnung entlang der Innenlänge der bogenförmigen Segmente ausgeführt sind. Eine Beschränkung hierauf besteht jedoch nicht. Eine Ausgestaltung der Erhebungen und Einsenkungen 110 als beispielsweise abwechselnd rundkonkave und rundkonvexe, halbkugel- oder kuppelförmige Erhebungen und Ausnehmungen, als ausreichend Reibschluss bereitstellende Flächenrauheit oder als ausreichend Reibschluss bereitstellende gummielastische Komponente ist ebenfalls denkbar.

Die Vorrichtung zur Verriegelung eines schraubbaren Elements und eine diese in Zusammenwirkung mit anderen Teilen verwendende Anordnung wurden anhand eines verdrehsicheren Haltens einer Gewindespindel für ein manuelles Notlösen eines Federspeicherbremszylinders beschrieben. Anwendungs- oder Einsatzbereiche der Verriegelungsvorrichtung bzw. der Anordnung sind jedoch nicht darauf beschränkt, sondern finden sich vielfältig und insbesondere an schraubbaren Verbindungen, die einerseits zwar festzulegen und gegen selbsttätiges und/oder unerwünschtes Verdrehen bzw. Lösen oder Festgehen zu sichern sind, andererseits aber einer jederzeit möglichen Verstellung oder einem jederzeit möglichen Lösen zugänglich bleiben sollen.

Vorstehend wurde somit eine Vorrichtung zur Verriegelung eines schraubbaren Elements 34, 36 beschrieben, mit einem flachförmigen, eine Öffnung umschließenden Ringteil 82 mit einem Innenumfang 82a und einem Außenumfang 82b in einer Ringteilebene, zumindest einen ersten und einen zweiten Verriegelungsabschnitt 84a, 84b, die bogensegmentförmig jeweils mit einer vorbestimmten Länge an dem Außenumfang 82b des Ringteils 82 angeordnet sind und sich in einer zur Ringteilebene lotrechten ersten Richtung erstrecken, zumindest einen ersten und zweiten Mittelansatzabschnitt 86a, 86b, die versetzt gegenüber dem ersten und dem zweiten Verriegelungsabschnitt 84a, 84b jeweils an dem Innenumfang 82a des Ringteils 82 angeordnet sind und sich in einer zur Ringteilebene lotrechten zweiten Richtung, die zu der ersten Richtung entgegengesetzt ist, erstrecken, zumindest eine erste und eine zweite biegeelastische Ausformung 88a, 88b in einem Mittenbereich des Ringteils 82. Die Vorrichtung nimmt in einer Ruhelage eine Verriegelungsstellung ein und ist durch eine elastische Kippverformung um eine durch die erste und die zweite biegeelastische Ausformung verlaufende Achse X in eine Entriegelungsstellung versetzbar.

### Bezugszeichenliste

- 1: Kombizylinder
- 2: Federspeicherbremseinrichtung
- 4: Federspeicherbremszylinder
- 6: Gehäuse
- 8: Flansch
- 10: Federspeicherbremskammer
- 12: Speicherfeder
- 14: Federkammer
- 16: Federspeicherbremskolben
- 18: Boden
- 20: Kolbenteller
- 22: Federspeicherbremskolbenstange
- 24: Durchgangsöffnung
- 26: Trennwand
- 28: Führungsabschnitt
- 30: Notlöseeinrichtung
- 32: Hohlraum
- 34: Gewindespindel
- 35a, b: Seitenfläche
- 36: Mehrkantkopf
- 38: Buchse
- 40: Sicherungsscheibe
- 42: Anlageabschnitt
- 44: Sicherungsring
- 46: Mutter
- 47: Führungsteil
- 48: Indikatorstab
- 50: Anzeigeabschnitt
- 52: Steuerabschnitt
- 54: Feder
- 56: Stufenabschnitt
- 58: Anschlagkörper
- 66: Belüftungseinrichtung
- 68: Federmittel
- 80: Vorrichtung
- 82: Ringteil
- 82a: Innenumfang
- 82b: Außenumfang
- 84a, b: Verriegelungsabschnitt
- 86a, b: Mittelansatzabschnitt
- 87a, b: Seitenfläche
- 88a,: b Ausformung
- 90a, b: Rasteinrichtung
- 100: Einrasteinrichtung
- 110: Erhebungen/Einsenkungen
- 112: Erhebungen/Einsenkungen
- X: Achse
- α: Winkel

## Patentansprüche

1. Vorrichtung zur Verriegelung eines schraubbaren Elements (34, 36), umfassend
- einen eine Öffnung umschließenden Ringteil (82) mit einem Innenumfang (82a) und einem Außenumfang (82b) in einer Ringteilebene;
- zumindest einen ersten und einen zweiten Verriegelungsabschnitt (84a, 84b), die bogensegmentförmig jeweils mit einer vorbestimmten Länge an dem Außenumfang (82b) des Ringteils (82) angeordnet sind und sich in einer zur Ringteilebene lotrechten ersten Richtung erstrecken;
- zumindest einen ersten und zweiten Mittelansatzabschnitt (86a, 86b), die versetzt gegenüber dem ersten und dem zweiten Verriegelungsabschnitt (84a, 84b) jeweils an dem Innenumfang (82a) des Ringteils (82) angeordnet sind und sich in einer zur Ringteilebene lotrechten zweiten Richtung, die zu der ersten Richtung entgegengesetzt ist, erstrecken; und
zumindest eine erste und eine zweite biegeelastische Ausformung (88a, 88b) in einem Mittenbereich des Ringteils (82), **dadurch gekennzeichnet, dass** die Vorrichtung in einer Ruhelage eine Verriegelungsstellung einnimmt und durch eine biegeelastische Kippverformung um zumindest eine durch die erste und die zweite biegeelastische Ausformung (88a, 88b) verlaufende Achse (X) in eine Entriegelungsstellung versetzbar ist.

2. Vorrichtung nach Anspruch 1, **dadurch gekennzeichnet, dass** sich jeweils zwei Verriegelungsabschnitte (84a, 84b) diametral gegenüberliegen, der Ringteil (82) flachförmig ausgebildet ist und die biegeelastische Ausformung (88a, 88b) eine in die Verriegelungsstellung selbstrückstellende Federwirkung entfaltet.

3. Vorrichtung nach einem der vorangehenden Ansprüche, **dadurch gekennzeichnet, dass** der erste und der zweite Verriegelungsabschnitt (84a, 84b) entlang der vorbestimmten Länge jeweils eine zu einer Mitte des flachförmigen Ringteils (82) hin gerichtete Rasteinrichtung (90a, 90b, 110) aufweisen.

4. Vorrichtung nach Anspruch 2, **dadurch gekennzeichnet, dass** die Rasteinrichtung (90a, 90b, 110) eine vorbestimmte Anzahl von Erhebungen und Einsenkungen (110) aufweist, die dazu angeordnet sind, in der Verriegelungsstellung mit einer entsprechend vorbestimmten Anzahl von Erhebungen und Einsenkungen (112) außerhalb der Vorrichtung in gegen selbsttätige Verdrehung sicherndem Eingriff zu stehen.

5. Vorrichtung nach einem der vorangehenden Ansprüche, **dadurch gekennzeichnet, dass**
- die Öffnung des Ringteils (82) eine Ausnehmung zur Durchführung des schraubbaren Elements (34, 36) ausbildet,
- jeweils zu der Öffnung hin gerichtete Wandungen (87a, 87b) des ersten und des zweiten Mittelansatzabschnitts (86a, 86b) dazu angeordnet sind, in der Entriegelungsstellung mit korrespondierenden Wandungen (35a, 35b) eines durchgeführten schraubbaren Elements (34, 36) eine Wirkverbindung auszubilden, und
- jeweils nach außen gerichtete Wandungen (87c, 87d) des ersten und des zweiten Mittelansatzabschnitts (86a, 86b) derart ausgebildet sind, dass sie druckkraftbeaufschlagt und/oder drehmomentbeaufschlagt eine Außenform des schraubbaren Elements (34, 36) verdrehmittelkonform derart ergänzen, dass an den Mittelansatzabschnitten (86a, 86b) das schraubbare Element (34, 36) und die Vorrichtung wirkverbunden verdrehbar sind.

6. Vorrichtung nach einem der vorangehenden Ansprüche, **dadurch gekennzeichnet, dass**
- zumindest eine Wandung (87a, 87b) des ersten und des zweiten Mittelansatzabschnitts (86a, 86b), die sich bezogen auf den Ringteil (82) in der zweiten Richtung erstreckt, in der Verriegelungsstellung um einen vorbestimmten Winkel (α) gegenüber der zweiten Richtung zum Außenumfang (82b) hin geneigt ist, und
- der erste und der zweite Mittelansatzabschnitt (86a, 86b) durch eine an nach außen gerichteten Wandungen (87c, 87d) desselben angreifende Druckkraft auslenkbar und den vorbestimmten Winkel (α) zu der zweiten Richtung hin verkleinernd in die Entriegelungsstellung verkippbar sind.

7. Vorrichtung nach einem der vorangehenden Ansprüche, **dadurch gekennzeichnet, dass** der erste und der zweite Mittelansatzabschnitt (86a, 86b) so ausgeformt sind, dass sie eine Außenform des schraubbaren Elements (34, 36) zu einer Innenform eines Verdrehmittels passend ergänzen und/oder vervollständigen.

8. Vorrichtung nach einem der vorangehenden Ansprüche, **dadurch gekennzeichnet, dass** die Vorrichtung aus einem biegesteifen Werkstoff hergestellt ist, vermittels der ersten und der zweiten elastischen Ausformung (88a, 88b) eine selbststellende Biegeelastizität um die durch die erste und die zweite biegeelastische Ausformung (88a, 88b) verlaufende Achse (X) aufweist, druckkraftbeaufschlagt unter Verkippung um die Achse (X) die Entriegelungsstellung einnimmt, in welcher die Vorrichtung zusammen mit dem schraubbaren Element (34, 36) verdrehbar ist, und druckkraftlos und um die Achse (X) selbststellend die Verriegelungsstellung einnimmt, in welcher die Vorrichtung selbsthemmend gegen eine Verdrehung des schraubbaren Elements (34, 36) sichert.

9. Vorrichtung nach Anspruch 8, **dadurch gekennzeichnet, dass** die Vorrichtung aus einem Kunststoff hergestellt ist

10. Anordnung zur Verriegelung eines schraubbaren Elements, **gekennzeichnet durch**
- die Vorrichtung (80) nach einem der Ansprüche 1 bis 9
- das schraubbare Element (34, 36), wobei das schraubbare Element (34, 36) eine Außenform mit zumindest zwei Flächen (35a, 35b) aufweist, die zu zu der Öffnung hin gerichteten Wandungen (87a, 87b) der Mittelansatzabschnitte (86a, 86b) derart korrespondieren, dass die zumindest zwei Flächen (35a, 35b) der Außenform des schraubbaren Elements (34, 36) zwischen den Wandungen (87a, 87b) der Mittelansatzabschnitte (86a, 86b) aufgenommen sind und eine Relativdrehung des schraubbaren Elements (34, 36) gegenüber der Vorrichtung (80) unterbunden ist; und
- eine ringförmige Einrasteinrichtung (100), die an einem das schraubbare Element (34, 36) führenden und/oder aufnehmenden Lagerteil (38) verdrehfest angeordnet ist und entlang der Ringform eine Vielzahl von Erhebungen und Einsenkungen (110) aufweist, die den Erhebungen und Einsenkungen (110) der Rasteinrichtung (90a, 90b) der Vorrichtung (80) so zugeordnet sind, dass die Erhebungen und Einsenkungen (110, 112) in der Verriegelungsstellung ineinandergreifen.

## Claims

1. Device for locking a screwable element (34, 36), comprising
- a ring part (82) enclosing an opening and having an inner circumference (82a) and an outer circumference (82b) in a ring dividing plane;
- at least one first and one second locking section (84a, 84b), each of which is located on the outer circumference (82b) of the ring part (82) in the manner of an arc segment with a pre-determined length and extends in a first direction perpendicular to the ring dividing plane;
- at least one first and one second central shoulder section (86a, 86b), each of which is located on the inner circumference (82a) of the ring part (82) with an offset relative to the first and second locking sections (84a, 84b) and extends in a second direction perpendicular to the ring dividing plane which is opposite to the first direction; and
- at least one first and one second flexible moulding (88a, 88b) in a central region of the ring part (82), **characterised in that**
the device adopts a locking position in an inoperative state and can be moved into an unlocking position by a flexible tilting deformation about at least one axis (X) extending through the first and second flexible mouldings (88a, 88b).

2. Device according to claim 1, **characterised in that** two locking sections (84a, 84b) are located diametrically opposite one another, **in that** the ring section (82) has a flat shape and **in that** the flexible moulding (88a, 88b) deploys a spring action for automatic return into the locking position.

3. Device according to any of the preceding claims, **characterised in that** each of the first and second locking sections (84a, 84b) has along the predetermined length a latching device (90a, 90b, 110) oriented towards a centre of the flat ring part (82).

4. Device according to claim 2, **characterised in that** the latching device (90a, 90b, 110) has a predetermined number of raised areas and depressions (110), which are provided for engagement with a corresponding predetermined number of raised areas and depressions (112) outside the device to protect against automatic twisting.

5. Device according to any of the preceding claims, **characterised in that**
- the opening of the ring part (82) forms a recess for the passage of the screwable element (34, 36),
- walls (87a, 87b) of the first and second central shoulder sections (86a, 86b), which are oriented towards the opening, are provided to form an operative connection with corresponding walls (35a, 35b) of a screwable element (34, 36) passing through in the unlocking position, and
- outward-facing walls (87c, 87d) of the first and second central shoulder sections (86a, 86b) are designed such that, if a pressure and/or a torque is/are applied, they complete an external form of the screwable element (34, 36) in conformity with twisting means in such a way that the screwable element (34, 36) and the device can be twisted on the central shoulder sections (86a, 86b) in operative connection.

6. Device according to any of the preceding claims, **characterised in that**
- at least one wall (87c, 87d) of the first and second central shoulder sections (86a, 86b), which extends in the second direction relative to the ring part (82), is in the locking position inclined by a predetermined angle (α) towards the outer circumference (82b) relative to the second direction, and
- the first and second central shoulder sections (86a, 86b) can be deflected by a pressure acting on outward-facing walls (87c, 87d) thereof and tilted into the unlocking position while reducing the predetermined angle (α) towards the second direction.

7. Device according to any of the preceding claims, **characterised in that** the first and second central shoulder sections (86a, 86b) are shaped such they complement and/or complete an outer shape of the screwable element (34, 36) to match an inner shape of a twisting means.

8. Device according to any of the preceding claims, **characterised in that** the device is made of a rigid material, **in that** is has a self-adjusting flexibility about the axis (X) extending through the first and second flexible mouldings (88a, 88b), which is provided by the first and second flexible mouldings (88a, 88b), **in that** it adopts the unlocking position, in which the device can be twisted together with the screwable element (34, 36) under the application of pressure while tilting about the axis (X), and **in that** it adopts the locking position, in which the device automatically prevents a twisting of the screwable element (34, 36), in the absence of pressure while self-adjusting about the axis (X).

9. Device according to claim 8, **characterised in that** the device is made of a plastic material.

10. Assembly for locking a screwable element, **characterised by**
- the device (80) according to any of claims 1 to 9,
- the screwable element (34, 36), wherein the screwable element (34, 36) has an outer shape with at least two surfaces (35a, 35b), which correspond to walls (87a, 87b) of the central shoulder sections (86a, 86b) oriented towards the opening in such a way that the at least two surfaces (35a, 35b) of the outer shape of the screwable element (34, 36) are accommodated between the walls (87a, 87b) of the central shoulder sections (86a, 86b) and a rotation of the screwable element (34, 36) relative to the device (80) is prevented; and
- an annular latching device (100), which is non-rotatably located on a bearing part (38) guiding and/or accommodating the screwable element (34, 36), and which has along its annular shape a plurality of raised areas and depressions (110), which are matched to the raised areas and depressions (110) of the latching device (90a, 90b) of the device (80) in such a way that the raised areas and depressions (110, 112) engage with one another in the locking position.

## Revendications

1. Dispositif de verrouillage d'un élément (34, 36) fileté, comprenant
- une partie (82) annulaire entourant une ouverture et ayant un pourtour (82a) intérieur et un pourtour (82b) extérieur dans un sous-plan annulaire ;
- au moins un premier et un deuxième segments (84a, 84b) de verrouillage, qui sont disposés en forme de segments d'arc, respectivement d'une longueur déterminée à l'avance, sur le pourtour (82b) extérieur de la partie (82) annulaire et qui s'étendent, dans un premier sens, perpendiculairement au sous-plan annulaire ;
- au moins un premier et un deuxième segments (86a, 86b) de bout médians, qui sont disposés respectivement sur le pourtour (82a) intérieur de la partie (82) annulaire, en étant décalés par rapport au premier et au deuxième segments (84a, 84b) de verrouillage et qui s'étendent dans un deuxième sens, qui est perpendiculaire au sous plan-annulaire et qui est contraire au premier sens et
au moins une première et une deuxième déformations (88a, 88b) ayant une élasticité de flexion dans une région médiane de la partie (82) annulaire, **caractérisé en ce que**
le dispositif prend, dans une position de repos, une position de verrouillage et, par une déformation de basculement à élasticité de flexion autour d'un axe (X) passant par la première et la deuxième déformations (88a, 88b) à élasticité de flexion, peut être mis dans une position de déverrouillage.

2. Dispositif suivant la revendication 1, **caractérisé en ce que** deux segments (84a, 84b) de verrouillage s'opposent diamétralement, la partie (82) annulaire est constituée sous une forme plane et la déformation (88a, 88b) à élasticité de flexion déploie un effet de ressort ramenant automatiquement dans la position de verrouillage.

3. Dispositif suivant l'une des revendications précédentes, **caractérisé en ce que** le premier et le deuxième tronçons (84a, 84b) de verrouillage ont, le long d'une longueur définie à l'avance, respectivement un dispositif (90a, 90b, 110) d'encliquetage dirigé vers un milieu de la partie (82) annulaire de forme plane.

4. Dispositif suivant la revendication 2, **caractérisé en ce que** le dispositif (90a, 90b, 110) d'encliquetage a un nombre déterminé à l'avance de bosses et de creux (110) disposés pour venir en prise, en empêchant une rotation automatique, avec un nombre correspondant déterminé à l'avance de bosses et de creux (12) à l'extérieur du dispositif.

5. Dispositif suivant l'une des revendications précédentes, **caractérisé en ce que**
- l'ouverture de la partie (82) annulaire forme un évidement pour le passage de l'élément (34, 36) fileté,
- des parois (87a, 87b), dirigées vers l'ouverture, du premier et du deuxième segments (86a, 86b) de bout médians, sont disposées de manière à constituer une liaison active en la position de déverrouillage avec des parois (35a, 35b) correspondantes d'un élément (34, 36) fileté engagé et
- des parois (87c, 87d), dirigées vers l'extérieur, du premier et du deuxième segments (86a, 86b) de bout médians, étant constituées de manière à ce qu'ils complètent, en appliquant une force de pression et/ou un couple, une forme extérieure de l'élément (34, 36) fileté d'une manière conforme à un moyen de torsion, de façon à ce que, sur les tronçons (86a, 86b) de bout médians, l'élément (34, 36) fileté et le dispositif puissent subir une torsion en liaison active.

6. Dispositif suivant l'une des revendications précédentes, **caractérisé en ce que**
- au moins une paroi (87a, 87b), du premier et du deuxième segments (86a, 86b) de bout médians, qui s'étendent, par rapport à la partie (82) annulaire, dans le deuxième sens, est inclinée d'un angle (α) déterminé à l'avance, par rapport au deuxième sens, en direction du pourtour (82b) extérieur et
- le premier et le deuxième segments (86a, 86b) de bout médians peuvent être déviés par une force de pression s'appliquant à leurs parois (87c, 87d) dirigées vers l'extérieur et basculés dans la position de déverrouillage en diminuant l'angle (α) déterminé à l'avance avec le deuxième sens.

7. Dispositif suivant l'une des revendications précédentes, **caractérisé en ce que** le premier et le deuxième segments (86a, 86b) de bout médians sont déformés, de manière à compléter et/ou achever une forme extérieure de l'élément (34, 36) fileté en l'adaptant à une forme intérieur d'un moyen de torsion.

8. Dispositif suivant l'une des revendications précédentes, **caractérisé en ce que** le dispositif est fabriqué en un matériau résistant à la flexion, a, au moyen de la première et de la deuxième déformation (88a, 88b) élastique, une élasticité à la flexion automatique autour de l'axe (X) passant par la première et la deuxième déformations (88a, 88b) à l'élasticité de flexion, prend, lorsqu'il lui est appliqué une force de pression, en basculant autour de l'axe (X), la position de déverrouillage dans laquelle le dispositif peut subir une torsion ensemble avec l'élément (34, 36) fileté et, sans force de pression et en revenant automatiquement autour de l'axe (X), prend la position de verrouillage dans laquelle le dispositif empêche, par blocage automatique, une torsion de l'élément (34, 36) vissé.

9. Dispositif suivant la revendication 8, **caractérisé en ce que** le dispositif est fabriqué en une matière plastique.

10. Agencement de verrouillage d'un élément fileté, **caractérisé par**
- le dispositif (80) suivant l'une des revendications 1 à 9
- l'élément (34, 36) fileté, l'élément (34, 36) fileté ayant une forme extérieure, ayant au moins deux surfaces (35a, 35b), qui correspondent à des parois (87a, 87b), dirigées vers l'ouverture, des segments (86a, 86b) de bout médians, de manière à ce que les au moins deux surfaces (35a, 35b) de la forme extérieure de l'élément (34, 36) fileté soient reçues entre les parois (87a, 87b) des segments (86a, 86b) de bout médians et à interdire une rotation relative de l'élément (34, 36) fileté par rapport au dispositif (80) et
- un dispositif (100) annulaire d'encliquetage, qui est monté fixe en torsion sur une partie (38) de palier, guidant et/ou recevant l'élément (34, 36) fileté et qui a, le long de la forme annulaire, une pluralité de bosses et de creux (110), qui sont associés aux bosses et aux creux (110) du dispositif (90a, 90b) d'encliquetage du dispositif (80), de manière à ce que les bosses et les creux (110, 112) s'interpénètrent dans la position de verrouillage.
